Europäisches Patentamt

(19) European Patent Office

Office européen des brevets

(11) Publication number : **0 623 283 A1**

(12) **EUROPEAN PATENT APPLICATION**

(21) Application number : 94850064.0

(22) Date of filing : 26.04.94

(51) Int. Cl.⁵ : **A01N 59/08,** // (A01N59/08, 59:00, 37:02)

(30) Priority : 26.04.93 SE 9301389

(43) Date of publication of application : 09.11.94 Bulletin 94/45

(84) Designated Contracting States : AT BE CH DE DK ES FR GB GR IE IT LI LU MC NL PT SE

(71) Applicant : **KEMIRA KEMI AKTIEBOLAG** P.O. Box 902 S-251 09 Helsingborg (SE)

(72) Inventor : **Ericsson, Claes** Björnbärsgatan 15 S-267 37 Bjuv (SE) Inventor : **Malmqvist, Sven-Olof** Tranekärr 8586 S-263 90 Höganäs (SE) Inventor : **Müller, Arthur** Bärnstensgatan 19c S-253 68 Helsingborg (SE) Inventor : **Nilsson, Torsten** Hälsögatan 5 S-253 72 Helsingborg (SE)

(74) Representative : **Inger, Lars Ulf Bosson** L + U INGER Patentbyra AB Garvaregatan 12 S-262 63 Ängelholm (SE)

(54) **Algae removing agent.**

(57)    The present invention relates to a composition for algae and moss removal, whereby it comprises calcium chloride, a carboxylic acid having 2 to 5 carbon atoms, and hydropgen peroxide.

EP 0 623 283 A1

Technical field

The present invention relates to an algae and moss removing agent in the form of a composed composition in order to free surfaces from algae and moss.

The object of the present invention is to obtain a composition by means of which cleansing of surfaces from algae and moss can be done in an efficient and rational way.

Background of the invention

Growth of algae and moss on different surfaces has become a more and more an increasing problem lately, and has probably its origin in an increased acidity of the atmospheric precipitation. Growth of moss on certain roofs has increased very heavily and no other method than mechanical cleansing for longterm results has thereby not been found. The mechanical cleansing is, however, not working in the depth which means that the moss will soon be back again in full volume. The moss is also covering stone walls and pathways, as well as in grass lawns. Algae has also become a general scourge, growing on roofs, wind barge boards, walls, fences, palings, trees, stairways, stonewalls, and stone pathways, i.e. on most surfaces outdoors, and then particularly where the sun does not reach the surface to provide a high surface temperature, i.e. in shadow positions.

On the market today, an algae cleansing agent is present based on tertiary ammonium compounds.

This has, however, turned out to have little effect on moss, and moreover it has a limited longterm effect on algae.

There is thus a considerable problem to be solved.

Description of the present invention

It has now surpringly been shown possible to solve the above problem by means of the present invention, which is characterized in that the composition comprises calcium chloride, a straight or branched carboxylic acid having 2 to 5 carbon atoms, and hydrogen peroxide.

Further characteristics will be evident form the accompanying claims.

The carboxylic acid consists of acetic acid, n-propionic acid, isopropionic acid, butyric acid, iso-butyric acid, tert.-butyric acid, valeric acid, whereby propionic acid is preferred.

By means of the present invention a rapid and effecient elimination of algae and moss, as well as a considerable longterm effect.

The invention will now be described by way of the examples below.

Example 1

600 liters of 5% n-propionic acid, 370 liters of 37% $CaCl_2$, and 30 liters of 35% $H_2O_2$ were mixed together. and were provided with 1 g of bromothymol blue, as a coloring marker.

This gives a basic solution which is diluted with equal volume of water before application, suitable by means of a spraying equipment. 2 liters of ready-to-use solution give and efficient cleansing of 5 m². 

Example 2

Products within the scope of the present invention can be produced using the following ingredients within the ranges given

| Ingredients | % conc. solution | % in ready sol | preferably |
|---|---|---|---|
| $CaCl_2$ | 10 -50 | 5 -25 | 5 -10 |
| N-propionic acid | 1 - 5 | 0.2 - 2.5 | 0.5 - 2.5 |
| $H_2O_2$ | 0.5- 4.0 | 0.1 - 2.0 | 0.25- 0.75 |
| Water to | to 100 | to 100 | to 100 |

optionally one may add a coloring agent to be a coloring marker so that one may note where one has sprayed and where not.

The compositions can be prepared by simple mixing of aqueous solutions of the ingredients given, whereby these can be made more concentrated in order to minimize transport of water, in order to be mixed with water to a final concentration immediately before use.

The composition is applied in an amount of 0.5 to 2 liters per m2 depending on growth of algae or moss.

Tests carried out on algae coated barge boards show that the longterm effect is very good, ad amounts, in one test, to 18 months. Tests carried out on moss attached stable roofs show a killing of the moss within 30 min., the color of the moss changes from green to red within this time period. The longterm effect is good as well, as a killing of the roots of the moss down into the roof material has taken place.

Tests carried out in a lawn shows a weaker moss killing effect than on roof. This can be explained by the diluting effect which exists by means of the moisture in the grass.

The composition can also be prepared in dry form by absorbing a solution in an inorganic absorbent, such as silic acid, zeolites, clay, or diatomous earth. Hereby the composition can be distributed in dry form and be spread out as a granulate or a powder, whereby the active composition migrates from the absorbent and provides its effect intended.

## Patentansprüche

1. Composition for algae and moss removal, **characterized** in that it comprises calcium chloride, a carboxylic acid having 2 to 5 carbon atoms, and hydropgen peroxide.

2. Composition according to claim 1, **characterized** in that the calcium chloride is 5 to 25 %, the carboxylic acid is 0.2 to 2.5 %, and the hydrogen peroxide is 0.1 to 2.0 % of the composition ready-to-use.

3. Composition according to claim 2, **characterized** in that the calcium chloride is 5 to 10 %, the carboxylic acid is 0.5 to 2.5 %, and the hydrogen peroxide is 0.25 to 0.75 % of the composition ready-to-use.

4. Composition according any of claims 1-3, **characterized** in that propionic acid is the carboxylic acid.

5. Composition according to one or more of claims 1-4, **characterized** in that it is provided with a coloring marker.

6. Composition according to one or more of the preceeding claims, **characterized** in that it is present in dry form absorbed on an inorganic absorbent.

7. Composition according to claim 6, **characterized** in that the absorbent is silic acid, zeolite, clay, and/or diatomous earth.

European Patent
Office

**EUROPEAN SEARCH REPORT**

Application Number

EP 94 85 0064

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 164 477 (E.E.WHITLEY)<br>* column 8, line 50 - line 64 *<br>* claims 1,3 *<br>--- | 1-7 | A01N59/08<br>//(A01N59/08,<br>59:00,37:02) |
| A | DATABASE WPI<br>Week 8628,<br>Derwent Publications Ltd., London, GB;<br>AN 86-180536 [28]<br>& JP-A-61 115 008 (NOMADA H) 2 June 1986<br>* abstract *<br>--- | 1-7 | |
| A | DATABASE WPI<br>Week 8550,<br>Derwent Publications Ltd., London, GB;<br>AN 85-313253 [50]<br>& JP-A-60 217 274 (MITSUBISHI HEAVY IND)<br>30 October 1985<br>* abstract *<br>--- | 1-7 | |
| A | DATABASE WPI<br>Week 7941,<br>Derwent Publications Ltd., London, GB;<br>AN 79-74638B [41]<br>& JP-A-54 028 447 (NIPPON OIL) 17<br>September 1979<br>* abstract *<br>--- | 1-7 | TECHNICAL FIELDS SEARCHED (Int.Cl.5)<br><br>A01N |
| A | FR-A-2 193 785 (DEUTSCHE GOLD- UND<br>SILBER-SCHEIDEANSTALT)<br>* claim 1 *<br>--- | 1-7 | |
| A | DATABASE WPI<br>Week 8542,<br>Derwent Publications Ltd., London, GB;<br>AN 85-260375<br>& JP-A-60 174 701 (NIPPON LIGHT METAL) 9<br>September 1985<br>* abstract *<br>--- | 1-7 | |

-/--

The present search report has been drawn up for all claims

| Place of search | Date of completion of the search | Examiner |
|---|---|---|
| THE HAGUE | 2 August 1994 | Lamers, W |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

      ...................................................................
& : member of the same patent family, corresponding
document

EPO FORM 1503 03.82 (P04C01)

EP 0 623 283 A1

## European Patent Office

## EUROPEAN SEARCH REPORT

Application Number

EP 94 85 0064

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 241 390 (ATOCHEM) <br> * claims 1,3,4 * <br> ----- | 1-7 | |

TECHNICAL FIELDS SEARCHED (Int.Cl.5)

The present search report has been drawn up for all claims

| Place of search | Date of completion of the search | Examiner |
|---|---|---|
| THE HAGUE | 2 August 1994 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)